(19) Europäisches Patentamt / European Patent Office / Office européen des brevets

(11) **EP 3 042 271 B1**

(12) **EUROPEAN PATENT SPECIFICATION**

(45) Date of publication and mention
of the grant of the patent:
**18.03.2020 Bulletin 2020/12**

(21) Application number: **14772002.3**

(22) Date of filing: **03.09.2014**

(51) Int Cl.:
*G06F 3/0362* (2013.01)       *G04G 21/00* (2010.01)
*G06F 3/0488* (2013.01)       *G06F 3/0482* (2013.01)
*G06F 3/0485* (2013.01)       *G06F 3/0484* (2013.01)
*G06F 3/01* (2006.01)

(86) International application number:
**PCT/US2014/053958**

(87) International publication number:
**WO 2015/034966 (12.03.2015 Gazette 2015/10)**

(54) **USER INTERFACE OBJECT MANIPULATIONS IN A USER INTERFACE**

MANIPULATIONEN VON BENUTZERSCHNITTSTELLENOBJEKTEN BEI EINER
BENUTZERSCHNITTSTELLE

MANIPULATIONS D'UN OBJET SUR UNE INTERFACE UTILISATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.09.2013 US 201361959851 P
03.09.2013 US 201361873359 P
03.09.2013 US 201361873360 P
03.09.2013 US 201361873356 P**

(43) Date of publication of application:
**13.07.2016 Bulletin 2016/28**

(60) Divisional application:
**19217240.1**

(73) Proprietor: **Apple Inc.
Cupertino CA 95014 (US)**

(72) Inventors:
• **ZAMBETTI, Nicholas
San Francisco, CA 94102 (US)**
• **CHAUDHRI, Imran
Cupertino, CA 95014 (US)**
• **DASCOLA, Jonathan, R.
Cupertino, CA 95014 (US)**
• **DYE, Alan, C.
Cupertino, CA 95014 (US)**
• **FOSS, Christopher, Patrick
Cupertino, CA 95014 (US)**

• **GUZMAN, Aurelio
Cupertino, CA 95014 (US)**
• **KARUNAMUNI, Chanaka, G.
Cupertino, CA 95014 (US)**
• **KERR, Duncan, Robert
Cupertino, CA 95014 (US)**
• **LEMAY, Stephen, O.
Cupertino, CA 95014 (US)**
• **MARIC, Natalia
Cupertino, CA 95014 (US)**
• **WILSON, Christopher
Cupertino, CA 95014 (US)**
• **WILSON, Eric, Lance
Cupertino, CA 95014 (US)**
• **YANG, Lawrence, Y.
Cupertino, CA 95014 (US)**
• **BUTCHER, Gary, Ian
Cupertino, CA 95014 (US)**
• **IVE, Jonathan P.
Cupertino, CA 95014 (US)**

(74) Representative: **Barton, Russell Glen
Withers & Rogers LLP
4 More London Riverside
London SE1 2AU (GB)**

(56) References cited:
**EP-A1- 1 052 566       EP-A2- 1 850 213
US-A- 5 477 508        US-B1- 6 266 098
US-B1- 6 661 438**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

CROSS REFERENCE TO RELATED APPLICATIONS

This application claims priority to U.S. Provisional Patent Application Serial No. 61/873,356, filed September 3, 2013, entitled "CROWN INPUT FOR A WEARABLE ELECTRONIC DEVICE"; U.S. Provisional Patent Application Serial No. 61/873,359, filed September 3, 2013, entitled "USER INTERFACE OBJECT MANIPULATIONS IN A USER INTERFACE"; U.S. Provisional Patent Application Serial No. 61/959,851, filed September 3, 2013, entitled "USER INTERFACE FOR MANIPULATING USER INTERFACE OBJECTS"; U.S. Provisional Patent Application Serial No. 61/873,360, filed September 3, 2013, entitled "USER INTERFACE FOR MANIPULATING USER INTERFACE OBJECTS WITH MAGNETIC PROPERTIES"; and U.S. Non-provisional Patent Application Serial No. 14/476,657, filed September 3, 2014, entitled "USER INTERFACE FOR MANIPULATING USER INTERFACE OBJECTS WITH MAGNETIC PROPERTIES".

This application is related to co-pending applications U.S. Non-provisional Patent Application filed September 3, 2014, concurrently herewith, entitled "CROWN INPUT FOR A WEARABLE ELECTRONIC DEVICE," naming Nicholas Zambetti et al. as inventors; U.S. Non-provisional Patent Application filed September 3, 2014, concurrently herewith, entitled "USER INTERFACE FOR MANIPULATING USER INTERFACE OBJECTS", naming Nicholas Zambetti et al. as inventors; U.S. Non-provisional Patent Application Serial No. 14/476,657, filed September 3, 2014, entitled "USER INTERFACE OBJECT MANIPULATIONS IN A USER INTERFACE"; and U.S. Provisional Patent Application Serial No. 61/747,278, filed December 29, 2012, entitled "Device, Method, and Graphical User Interface for Manipulating User Interface Objects with Visual and/or Haptic Feedback".

### Field

This disclosure relates generally to user interfaces and, more specifically, to user interfaces using a crown input mechanism.

### Background

Advanced personal electronic devices can have small form factors. These personal electronic devices include, but are not limited to, tablets and smart phones. Use of such personal electronic devices involves manipulation of user interface objects on display screens which also have small form factors that complement the design of the personal electronic devices.

Exemplary manipulations that users can perform on personal electronic devices include navigating a hierarchy, selecting a user interface object, adjusting the position, size, and zoom of user interface objects, or otherwise manipulating user interfaces. Exemplary user interface objects include digital images, video, text, icons, maps, control elements such as buttons, and other graphics. A user can perform such manipulations in image management software, video editing software, word pressing software, software execution platforms such as an operating system's desktop, website browsing software, and other environments.

Existing methods for manipulating user interface objects on reduced-size touch-sensitive displays can be inefficient. Further, existing methods generally provide less precision than is preferable. Document US 5 477 508 A discloses a wearable device (a watch) with a mechanical crown and the related method that displays selectable elements of a menu, each element associated with data. A determination is made of a rotational speed wherein the speed is based on the angular velocity of a physical crown of the wearable electronic device. A subsequent element of the menu is displayed according to the movement of the crown.

### Summary

Systems and processes for manipulating a graphical user interface are disclosed. One process can include receiving user input through a crown to rotate a virtual object. The process includes selecting a surface of the object from among the multiple surfaces of the object in response to determining that the crown rotation exceeded a speed threshold.

### Brief Description of the Drawings

The present application can be best understood by reference to the following description taken in conjunction with the accompanying drawing figures, in which like parts may be referred to by like numerals.

FIG. 1 illustrates an exemplary wearable electronic device according to various examples.

FIG. 2 illustrates a block diagram of an exemplary wearable electronic device according to various examples.

FIGs. 3-12 illustrate an exemplary graphical user interface showing the selection of a surface of a two-sided object in response to a rotation of a crown.

FIG. 13 illustrates an exemplary process for selecting a surface of a two-sided object in response to a rotation of a crown.

FIGs. 14-23 illustrate an exemplary graphical user interface showing the selection of a surface of an object in response to a rotation of a crown.

FIG. 24 illustrates an exemplary process for selecting a surface of an object in response to a rotation of a crown.

FIG. 25 illustrates an exemplary multi-sided object in a graphical user interface.

FIG. 26 illustrates an exemplary computing system for manipulating a user interface in response to a rotation of a crown according to various examples.

## Detailed Description

In the following description of the disclosure and examples, reference is made to the accompanying drawings in which it is shown by way of illustration specific examples that can be practiced. It is to be understood that other examples can be practiced and structural changes can be made without departing from the scope of the disclosure.

Many personal electronic devices have graphical user interfaces with options that can be activated in response to user inputs. Typically, a user can select and activate a particular option from among multiple options. For example, a user may select an option by placing a mouse cursor over the desired option using a pointing device. The user may activate the option by clicking a button of the pointing device while the option is selected. In another example, a user may select and activate an option displayed on a touch-sensitive display (also known as a touch screen) by touching the touch-sensitive display at the location of the displayed option. Given the inefficiency of existing methods for selecting options on reduced-size touch-sensitive displays, there is a need for methods that enable users to more efficiently and conveniently select a desired option in a graphical user interface environment.

The examples below describe improved techniques for selecting a surface of a user interface object in a graphical user interface using user inputs. More specifically, these techniques use a physical crown as an input device to enable a user to select a desired option by selecting a surface of the user interface object. As a result, the examples described below allow a user to more efficiently and conveniently select a desired option.

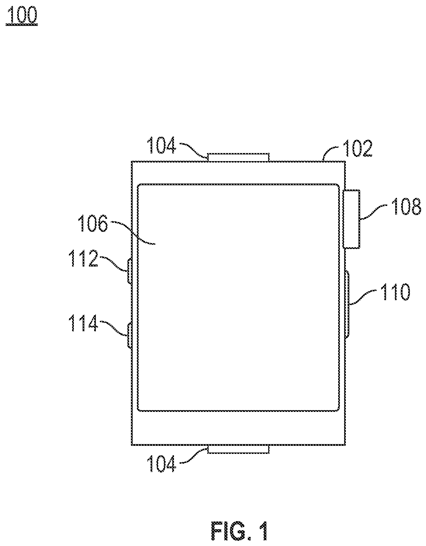

FIG. 1 illustrates exemplary personal electronic device 100. In the illustrated example, device 100 is a watch that generally includes body 102 and strap 104 for affixing device 100 to the body of a user. That is, device 100 is wearable. Body 102 can designed to couple with straps 104. Device 100 can have touch-sensitive display screen (hereafter touchscreen) 106 and crown 108. Device 100 can also have buttons 110, 112, and 114.

Conventionally, the term 'crown,' in the context of a watch, refers to the cap atop a stem for winding the watch. In the context of a personal electronic device, the crown can be a physical component of the electronic device, rather than a virtual crown on a touch sensitive display. Crown 108 can be mechanical meaning that it can be connected to a sensor for converting physical movement of the crown into electrical signals. Crown 108 can rotate in two directions of rotation (e.g., forward and backward). Crown 108 can also be pushed in towards the body of device 100 and/or be pulled away from device 100. Crown 108 can be touch-sensitive, for example, using capacitive touch technologies that can detect whether a user is touching the crown. Moreover, crown 108 can further be rocked in one or more directions or translated along a track along an edge or at least partially around a perimeter of body 102. In some examples, more than one crown 108 can be used. The visual appearance of crown 108 can, but need not, resemble crowns of conventional watches. Buttons 110, 112, and 114, if included, can each be a physical or a touch-sensitive button. That is, the buttons may be, for example, physical buttons or capacitive buttons. Further, body 102, which can include a bezel, may have predetermined regions on the bezel that act as buttons.

Display 106 can include a display device, such as a liquid crystal display (LCD), light-emitting diode (LED) display, organic light-emitting diode (OLED) display, or the like, positioned partially or fully behind or in front of a touch sensor panel implemented using any desired touch sensing technology, such as mutual-capacitance touch sensing, self-capacitance touch sensing, resistive touch sensing, projection scan touch sensing, or the like. Display 106 can allow a user to perform various functions by touching over hovering near the touch sensor panel using one or more fingers or other object.

In some examples, device 100 can further include one or more pressure sensors (not shown) for detecting a force or pressure applied to the display. The force or pressure applied to display 106 can be used as an input to device 100 to perform any desired operation, such as making a selection, entering or exiting a menu, causing the display of additional options/actions, or the like. In some examples, different operations can be performed based on the amount of force or pressure being applied to display 106. The one or more pressure sensors can further be used to determine a position that the force is being applied to display 106.

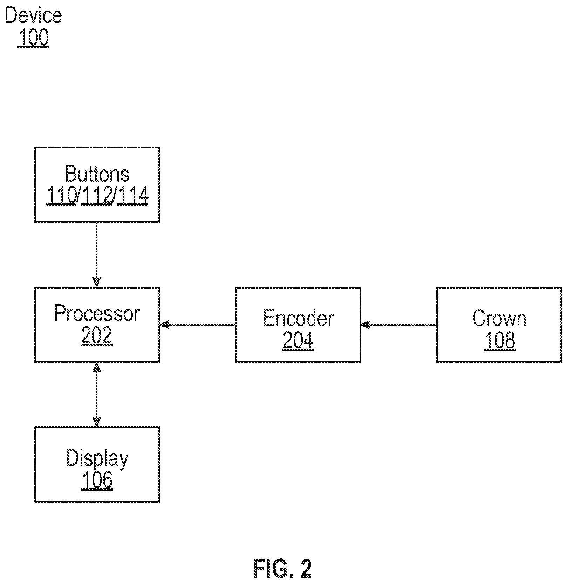

FIG. 2 illustrates a block diagram of some of the components of device 100. As shown, crown 108 can be coupled to encoder 204, which can be configured to monitor a physical state or change of state of crown 108 (e.g., the position of the crown), convert it to an electrical signal (e.g., convert it to an analog or digital signal representation of the position or change in position of crown 108), and provide the signal to processor 202. For instance, in some examples, encoder 204 can be configured to sense the absolute rotational position (e.g., an angle between 0-360°) of crown 108 and output an analog or digital representation of this position to processor 202. Alternatively, in other examples, encoder 204 can be configured to sense a change in rotational position (e.g., a change in rotational angle) of crown 108 over some sampling period and to output an analog or digital representation of the sensed change to processor 202. In these examples, the crown position information can further indicate a direction of rotation of the crown (e.g., a positive value can correspond to one direction and a negative value can correspond to the other). In yet other examples, encoder 204 can be configured to detect a rotation of crown 108 in any desired manner (e.g., velocity, acceleration, or the like) and can provide the crown rotational information to processor 202. In alternative examples, instead of providing information to processor 202, this information can be provided to other components of device 100. While the examples described herein refer to the use of rotational position of crown 108 to control scrolling, scaling, or an objects position, it should be appreciated that any other physical state of crown 108 can be used.

In some examples, the physical state of the crown can control physical attributes of display 106. For example, if crown 108 is in a particular position (e.g., rotated forward), display 106 can have limited z-axis traversal ability. In other words, the physical state of the crown can represent physical modal functionality of display 106. In some examples, a temporal attribute of the physical state of crown 108 can be used as an input to device 100. For example, a fast change in physical state can be interpreted differently than a slow change in physical state.

Processor 202 can be further coupled to receive input signals from buttons 110, 112, and 114, along with touch signals from touch-sensitive display 106. The buttons may be, for example, physical buttons or capacitive buttons. Further, body 102, which can include a bezel, may have predetermined regions on the bezel that act as buttons. Processor 202 can be configured to interpret these input signals and output appropriate display signals to cause an image to be produced by touch-sensitive display 106. While a single processor 202 is shown, it should be appreciated that any number of processors or other computational devices can be used to perform the general functions discussed above.

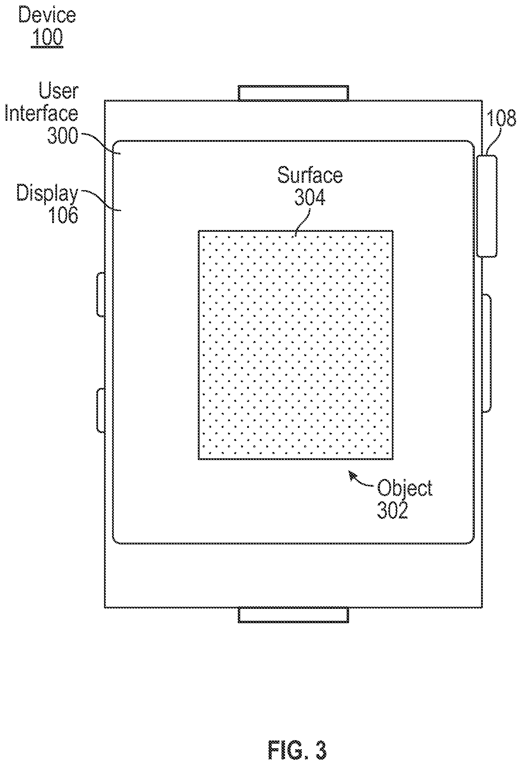

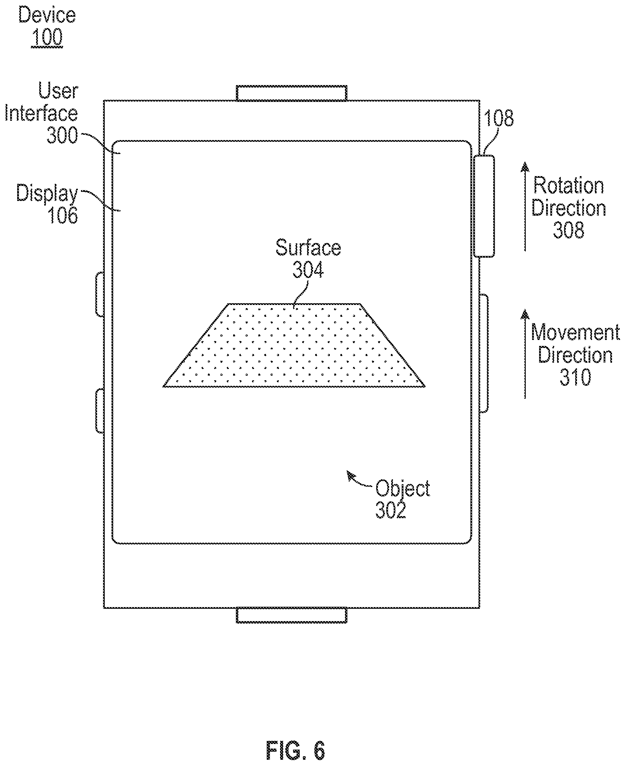

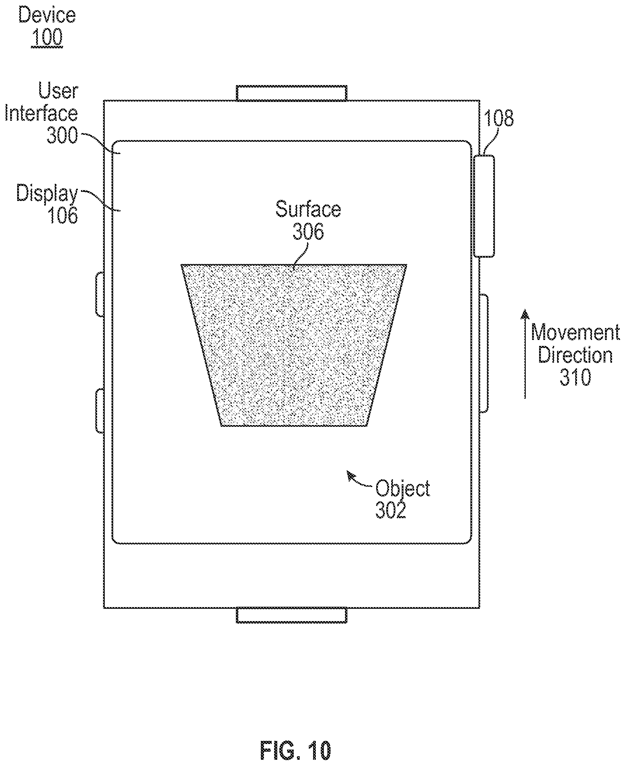

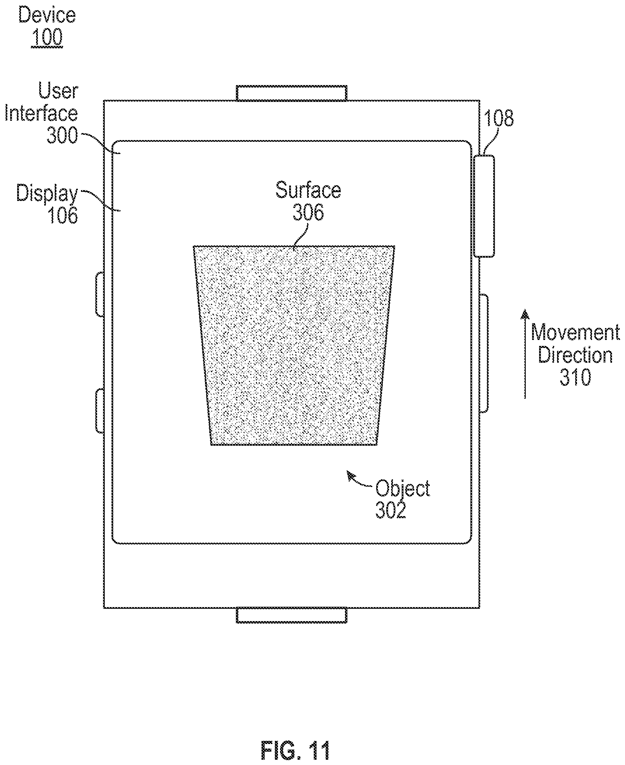

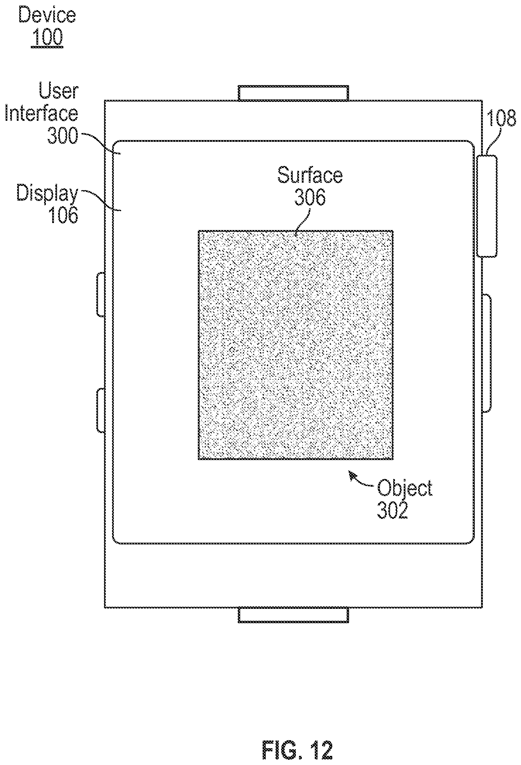

FIGs. 3-12 illustrate an exemplary user interface 300 displaying a two-sided user interface object 302. Object 302 has a first surface 304 and a second surface 306. Each surface of object 302 is a selectable surface associated with corresponding data. The data may be, for example, text, an image, an application icon, an instruction, a binary ON or OFF option, and the like. A user can select a surface from among the multiple selectable surfaces of object 302 by using a physical crown of a wearable electronic device to rotate object 302 to align the desired selection surface such that the surface is parallel to the display 106 of the device 100 and is displayed on the display 106. The system is designed to transition between one surface to another, rather than stopping in between surfaces. Although examples are described with respect to object surfaces (or planes) being parallel to display 106, the examples can also be modified to instead be described with respect to object surfaces (or planes) facing the viewer of display 106. This modification may be particularly helpful when object surfaces or display 106 is not plane surface.

Crown 108 of device 100 is a user rotatable user interface input. The crown 108 can be turned in two distinct directions: clockwise and counterclockwise. FIGs. 3-12 include rotation direction arrows illustrating the direction of crown rotation and movement direction arrows illustrating the direction of rotation of a user interface object, where applicable. The rotation direction arrows and movement direction arrows are typically not part of the displayed user interface, but are provided to aid in the interpretation of the figures. In this example, a clockwise direction rotation of crown 108 is illustrated by a rotation direction arrow pointing in the up direction. Similarly, a counterclockwise direction rotation of crown 108 is illustrated by a rotation direction arrow pointing in the down direction. The characteristics of the rotation direction arrow are not indicative of the distance, speed, or acceleration with which crown 108 is rotated by a user. Instead, the rotation direction arrow is indicative of the direction of rotation of crown 108 by the user.

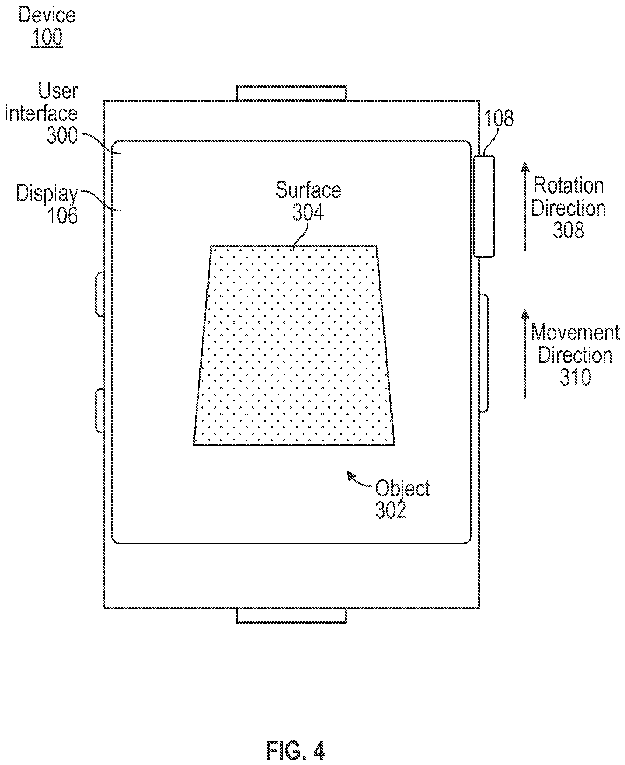

At FIG. 3, first surface 304 of object 302 is aligned parallel to display 106 and is displayed, indicating selection of first surface 304. The selected first surface 304 can be activated through, for example, an additional user input. At FIG. 4, device 100 determines a change in the position of crown 108 in the clockwise direction, as indicated by rotation direction arrow 308. Device 100 determines a rotational speed and a direction based on the determined change in the position of crown 108. In response to determining the change in the position of crown 108, the device rotates object 302, as indicated by movement direction arrow 310 and illustrated in FIG. 4. The rotation of object 302 is based on the determined rotational speed and direction. Rotational speed may be expressed in numerous ways. For example, rotational speed may be expressed as hertz, as rotations per unit of time, as rotations per frame, as revolutions per unit of time, as revolutions per frame, as a change in angle per unit of time, and the like. In one example, object 302 may be associated with a mass or may have a calculated rotational inertia.

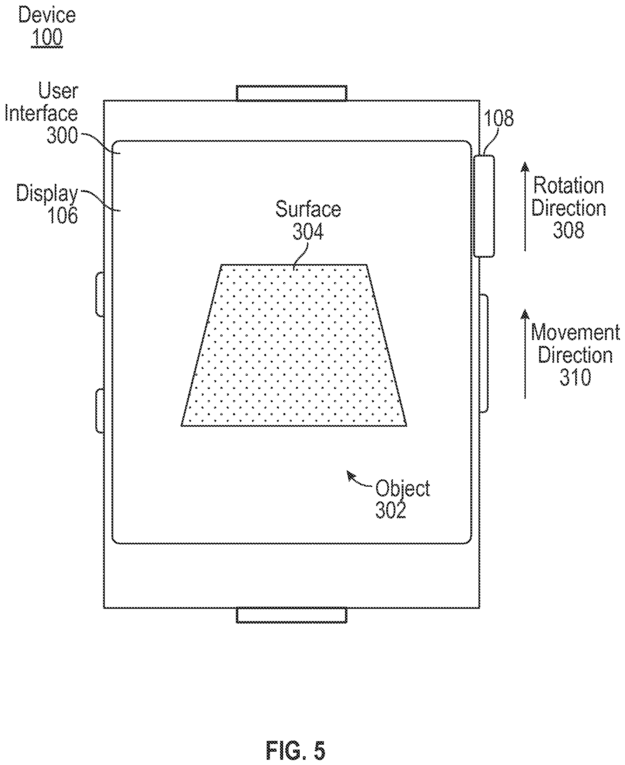

At FIGs. 5-7, device 100 continues to determine a change in the position of crown 108 in the clockwise direction, as indicated by rotation direction arrow 308. Device 100 determines a rotational speed and a direction based on the determined change in the position of crown 108. In response to determining the change in the position of crown 108, the device continues to rotate object 302, as indicated by movement direction arrow 310 and illustrated in FIG. 5-6. The rotation of object 302 is based on the determined rotational speed and direction.

In one example, the degrees of rotation of object 302, as measured from the object's position while parallel to display 106, is based on the determined speed. For easier visualization, object 302 can be thought of as having some similar qualities as an analog tachometer. As the determined speed increases, the degree of rotation of object 302 increases. In this example, if the rotation of crown 108 is maintained at a constant speed, object 302 will stay at a static rotated position that is not parallel to display 106. If the speed of the rotation of crown 108 is increased, the determined speed will increase and object 302 will rotate an additional amount.

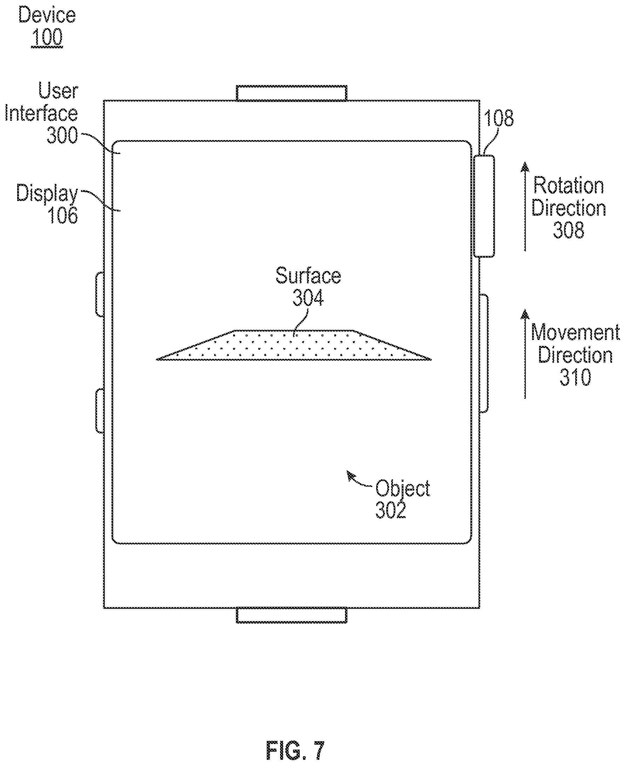

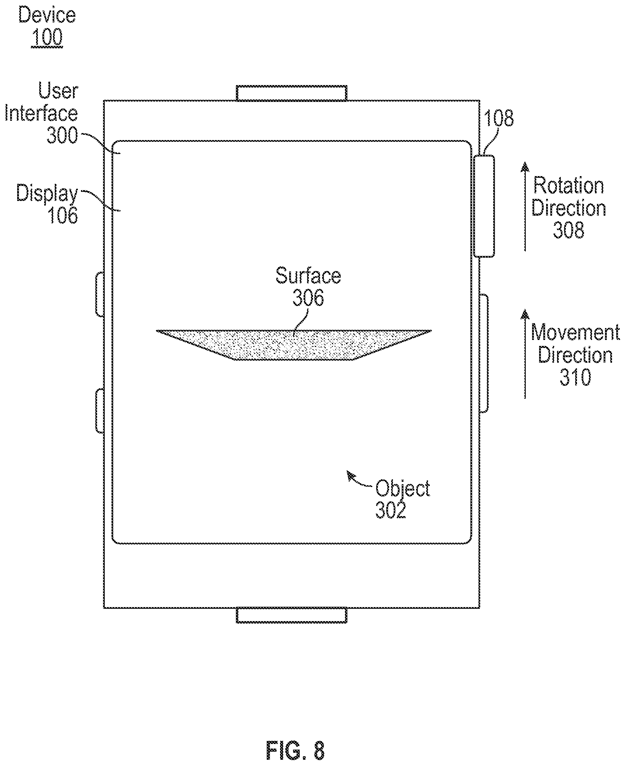

In some examples, object 302 is configured to become perpendicular to display 106 in response to the determined speed being at a speed threshold. When the determined speed exceeds the speed threshold, object 302 exceeds a total rotation of 90 degrees, causing first surface 304 of object 302 to no longer be displayed and instead causing second surface 306 of object 302 to be displayed. This transition between the display of first surface 304 and second surface 306 is illustrated as the transition between FIGs. 7 and 8. Thus, as the determined speed exceeds the speed threshold the object 302 flips from one side to another side.

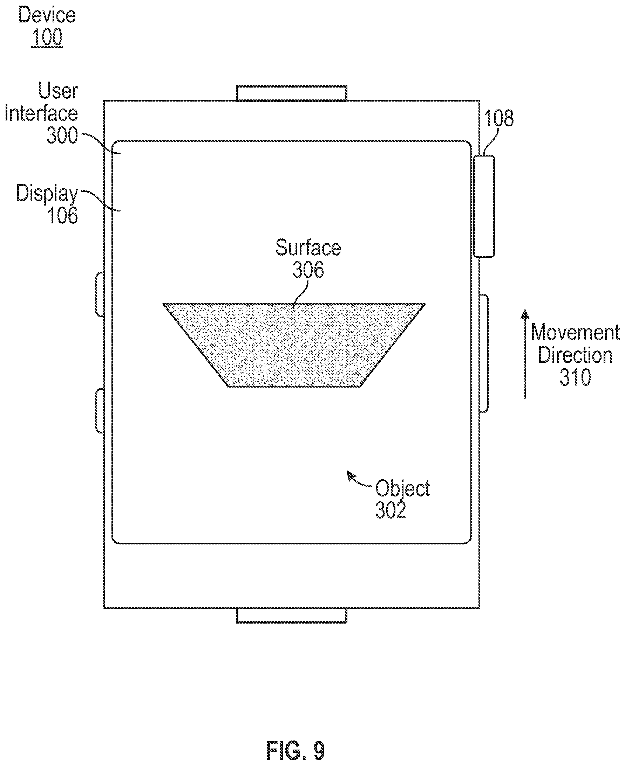

At FIGs. 9-12, device 100 determines that there is no further change in the position of crown 108. As a result of this determination, the rotation of object 302 is changed such that a surface of object 302 is parallel to display 106. This change may be animated, as illustrated in FIGs. 9-12. Device 100 will rotate object 302 such that the surface of object 302 partially facing display 106 when device 100 determines that there is no change in the position of crown 108 is the surface that will be displayed as being parallel to display 106. When a surface of object 302 is parallel to display 106 and no change in the position of crown 108 is detected, object 302 is in a steady state. An object is in a steady state when the object is not being translated, rotated, or scaled.

In some examples, when object 302 is in a steady state, the displayed surface of object 302 that is parallel to display 106 can be activated with an additional input. The displayed surface that is parallel to display 106 in a steady state is determined to be selected even prior to activation. For example, object 302 may be used as an ON/OFF switch or toggle. First surface 304 is associated with an ON instruction and second surface 306 is associated with an OFF instruction. A user can transition between the ON and OFF states by rotating crown 108 at above a speed threshold, causing object 302 to flip and display a desired surface. The desired surface is determined to be selected when the desired surface is displayed on display 106, is parallel to display 106, and no change in the position of crown 108 is detected.

While a surface is selected, the user can activate the selected surface by one or more of many techniques. For example, the user may press on touch-sensitive display 106, press on touch-sensitive display with a force greater than a predetermined threshold, press button 112, or simply allow the surface to remain selected for a predetermined amount of time. In another example, when the displayed surface is parallel to display 106, the action can be interpreted as both a selection and an activation of the data associated with the displayed surface.

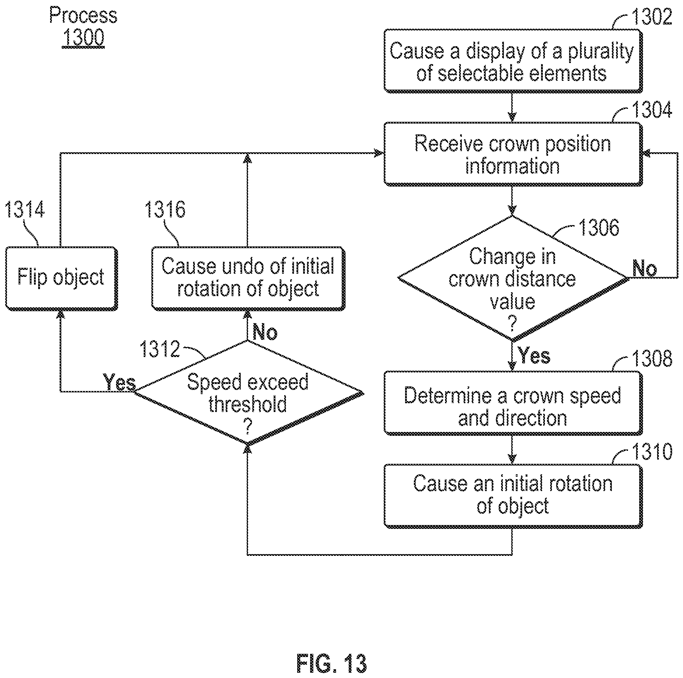

FIG. 13 illustrates an exemplary process for selecting a surface of a two-sided graphical user interface object in response to a rotation of a crown. Process 1300 is performed at a wearable electronic device (e.g., device 100 in FIG. 1) having a physical crown. In some examples, the electronic device also includes a touch-sensitive display. The process provides an efficient technique for selecting a surface of a two-sided, two-dimensional object.

At block 1302, the device causes a display of a two-sided object on a touch-sensitive display of a wearable electronic device. In some examples, the object is two-dimensional. In other examples, the object is three dimensional but only two surfaces are selectable. Each selectable surface of the object is associated with a corresponding data value. The data may be, for example, text, an image, an application icon, an instruction, a binary ON or OFF option, and the like.

At block 1304, the device receives crown position information. The crown position information may be received as a series of pulse signals, real values, integer values, and the like.

At block 1306, the device determines whether a change has occurred in a crown distance value. The crown distance value is based on an angular displacement of the physical crown of the wearable electronic device. A change in the crown distance value is indicative of a user providing input to the wearable electronic device by, for example, turning the physical crown. If the device determines that a change in the crown distance value has not occurred, the system returns to block 1304 and continues receiving crown position information. If the device determines that a change in the crown distance value has occurred, the system continues to block 1308, though the system may continue to receive crown position information.

At block 1308, the device determines a direction and a crown speed. The crown speed is based on the speed of rotation of the physical crown of the wearable electronic device. For example, the determined crown speed may be expressed as hertz, as rotations per unit of time, as rotations per frame, as revolutions per unit of time, as revolutions per frame, and the like. The determined direction is based on a direction of rotation of the physical crown of the wearable electronic device. For example, an up direction can be determined based on a clockwise rotation of the physical crown. Similarly, a down direction can be determined based on a counterclockwise rotation of the physical crown. In other examples, a down direction can be determined based on a clockwise rotation of the physical crown and an up direction can be determined based on a counterclockwise rotation of the physical crown.

At block 1310, in response to determining the change in the crown distance value, the device causes an initial rotation of the two-sided object on the display. The amount of the rotation is based on the determined crown speed. The direction of rotation is based on the determined direction. The rotation may be animated.

At block 1312, the device determines whether the determined crown speed exceeds a speed threshold. If the device determines that the determined crown speed exceeds the speed threshold, the device continues to block 1314. For example, the speed threshold may be thought of as an escape velocity (or escape speed). An escape velocity is the speed at which the kinetic energy plus the gravitational potential energy of an object is zero. If the device determines that the determined crown speed does not exceed the speed threshold, the device transitions to block 1316.

In some examples, the minimum angular velocity of crown rotation that is necessary to reach escape velocity corresponds directly to the instantaneous angular velocity of crown 108 (FIG. 1), meaning that the user interface of device 100, in essence, responds when crown 108 reaches a sufficient angular velocity. In some embodiments, the minimum angular velocity of crown rotation necessary for reaching the escape velocity is a calculated velocity that is based on, but not directly equal to, the instantaneous ("current") angular velocity of crown 108. In these examples, device 100 can maintain a calculated crown (angular) velocity V in discrete moments in time T according to equation 1:

$$V_T = V_{(T-1)} + \Delta V_{CROWN} - \Delta V_{DRAG}. \qquad\qquad (EQ.\ 1)$$

In equation 1, $V_T$ represents a calculated crown velocity (speed and direction) at time T, $V_{(T-1)}$ represents the previous velocity (speed and direction) at time T-1, $\Delta V_{CROWN}$ represents the change in velocity caused by the force being applied through the rotation of the crown at time T, and $\Delta V_{DRAG}$ represents the change in velocity due to a drag force. The force being applied, which is reflected through $\Delta V_{CROWN}$, can depend on the current velocity of angular rotation of the crown. Thus, $\Delta V_{CROWN}$ can also depend on the current angular velocity of the crown. In this way, device 100 can provide user interface interactions based not only on instantaneous crown velocity but also based on user input in the form of crown movement over multiple time intervals, even if those intervals are finely divided. Note, typically, in the absence of user input in the form of $\Delta V_{CROWN}$, $V_T$ will approach (and become) zero based on $\Delta V_{DRAG}$ in accordance with EQ. 1, but $V_T$ would not change signs without user input in the form of crown rotation ($\Delta V_{CROWN}$).

Typically, the greater the velocity of angular rotation of the crown, the greater the value of $\Delta V_{CROWN}$ will be. However, the actual mapping between the velocity of angular rotation of the crown and $\Delta V_{CROWN}$ can be varied depending on the desired user interface effect. For example, various linear or non-linear mappings between the velocity of angular rotation of the crown and $\Delta V_{CROWN}$ can be used.

Also, $\Delta V_{DRAG}$ can take on various values. For example, $\Delta V_{DRAG}$ can depend on the velocity of crown rotation such that at greater velocities, a greater opposing change in velocity ($\Delta V_{DRAG}$) can be produced. In another example, $\Delta V_{DRAG}$ can have a constant value. It should be appreciated that the above-described requirements of $\Delta V_{CROWN}$ and $\Delta V_{DRAG}$ can be changed to produce desirable user interface effects.

As can be seen from EQ. 1, the maintained velocity ($V_T$) can continue to increase as long as $\Delta V_{CROWN}$ is greater than $\Delta V_{DRAG}$. Additionally, $V_T$ can have non-zero values even when no $\Delta V_{CROWN}$ input is being received, meaning that user interface objects can continue to change without the user rotating the crown. When this occurs, objects can stop changing based on the maintained velocity at the time the user stops rotating the crown and the $\Delta V_{DRAG}$ component.

In some examples, when the crown is rotated in a direction corresponding to a rotation direction that is opposite the current user interface changes, the $V_{(T-1)}$ component can be reset to a value of zero, allowing the user to quickly change the direction of the object without having to provide a force sufficient to offset the $V_T$.

At block 1314, the device causes the object to flip past a transition position between a first surface that was last selected and a second surface. For example, the object has flipped past the transition position when the object will not return to having the first surface displayed parallel to the display without receiving additional user input. In the example of a two-sided object, the transition position may be when the surface is perpendicular to the display.

Once the object reaches a steady state, the displayed surface that is parallel to the display can be activated by a designated user input. The displayed surface that is parallel to the display in a steady state is determined to be selected even prior to activation. An object is in a steady state when the object is not being translated, rotated, or scaled. This may result in the first surface of the object no longer being displayed, in the case of a cube-shaped object.

At block 1316, because the escape velocity has not been reached, the device causes the object to at least partially return to the object's initial position at the time of block 1302. For example, part of the initial rotation of the object caused at block 2410 can be negated. To achieve this, the device animates a rotation of the object that is in an opposite direction of the initial rotation at block 1310.

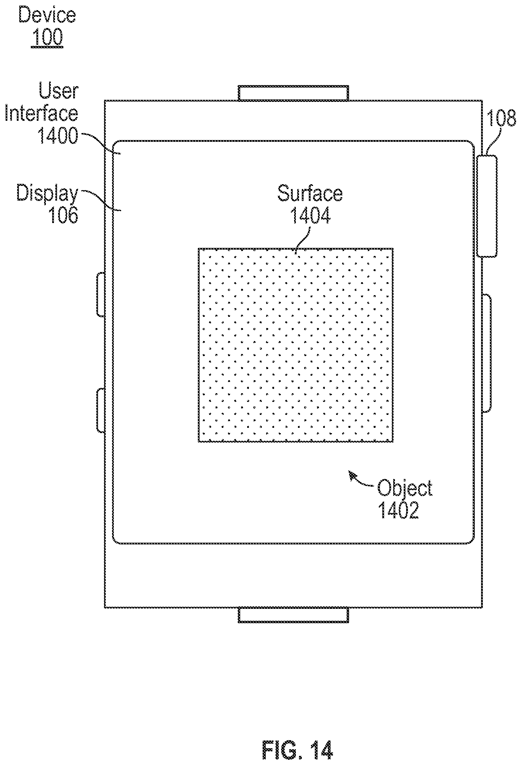

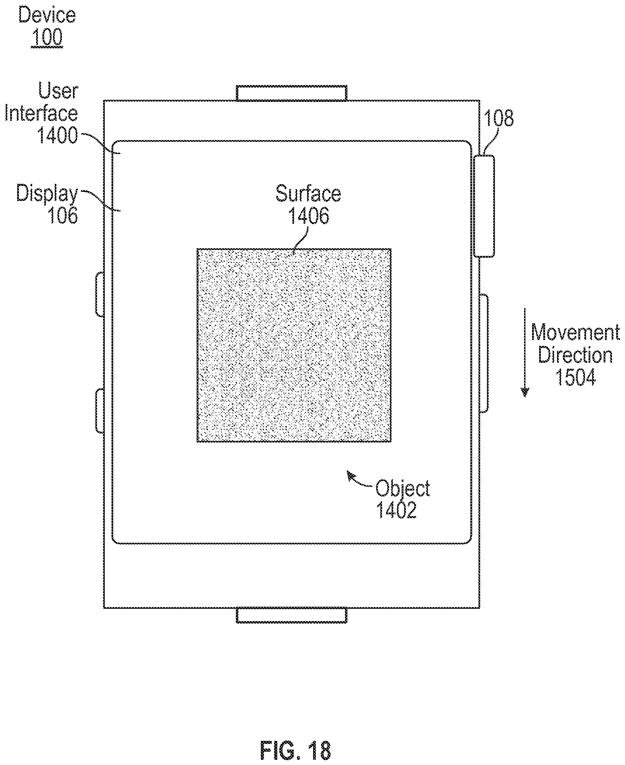

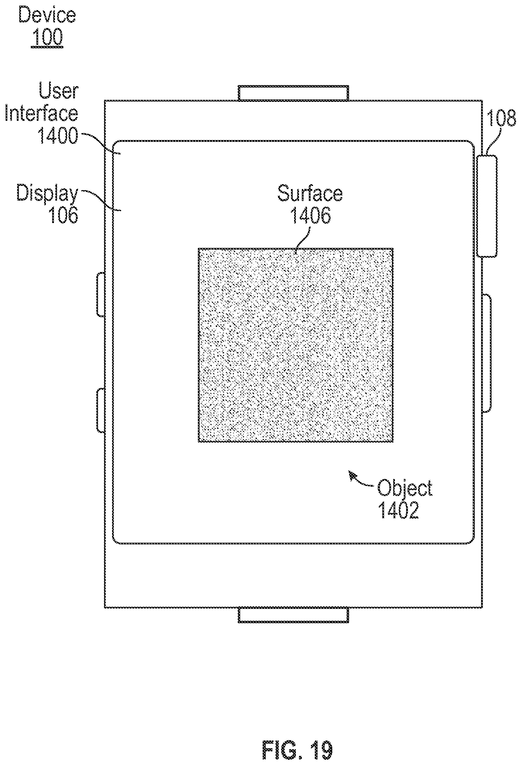

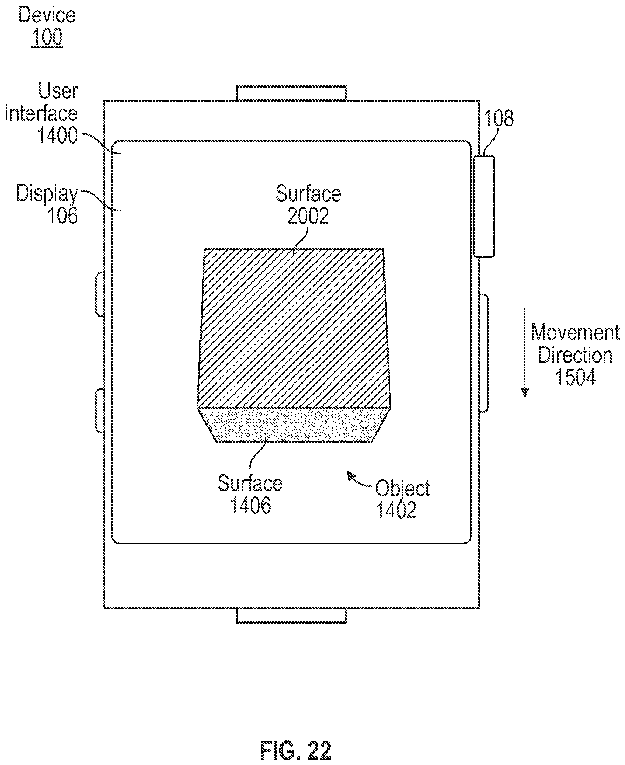

FIGs. 14-23 illustrate an exemplary graphical user interface showing the selection of a surface of a cube object in response to a rotation of a crown. Object 1402 is a cube with six surfaces. In this example, four of the six surfaces are selectable. These four selectable surfaces include surface 1404 of object 1402, which is facing a viewer of display 106, the top surface of object 1402, the bottom surface of object 1402, and the back surface of object 1402. In this example, the left and right surfaces of object 1402 are not selectable. However, the left and right surfaces of object 1402 may be selectable in other examples. Although examples are described with respect to object surfaces (or planes) being parallel to display 106, the examples can also be modified to instead be described with respect to object surfaces (or planes) facing the viewer of display 106. This modification may be particularly helpful when object surfaces or display 106 is not plane surface.

Each selectable surface of object 1402 is associated with corresponding data. The data may be, for example, text, an image, an application icon, an instruction, a quad-state setting (such as Off/Low/Medium/High), and the like. A user can select a surface from among the multiple selectable surfaces of the object 1402 by using a physical crown of a wearable electronic device to rotate object 1402 to align the desired selection surface such that it is parallel to the display 106 and displayed on display 106.

Crown 108 of device 100 is a user rotatable user interface input. The crown 108 can be turned in two distinct directions: clockwise and counterclockwise. FIGs. 14-23 include rotation direction arrows illustrating the direction of crown rotation and movement direction arrows illustrating the direction of rotation of a user interface object, where applicable. The rotation direction arrows and movement direction arrows are typically not part of the displayed user interface, but are provided to aid in the interpretation of the figures. In this example, a clockwise direction rotation of crown 108 is illustrated by a rotation direction arrow pointing in the up direction. Similarly, a counterclockwise direction rotation of crown 108 is illustrated by a rotation direction arrow pointing in the down direction. The characteristics of the rotation direction arrow are not indicative of the distance, speed, or acceleration with which crown 108 is rotated by a user. Instead, the rotation direction arrow is indicative of the direction of rotation of crown 108 by the user.

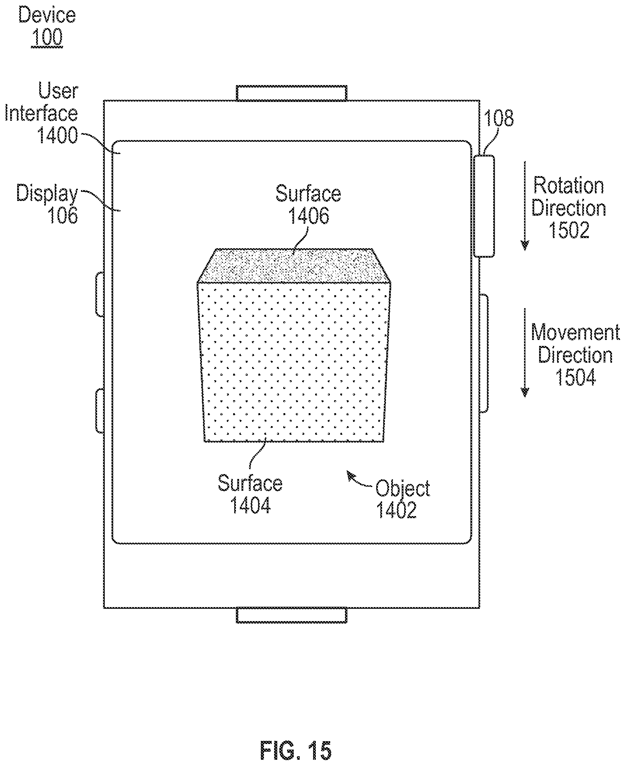

At FIG. 14, first surface 1404 of object 1402 is aligned parallel to display 106 and is displayed, indicating selection of first surface 1404. At FIG. 15, device 100 determines a change in the position of crown 108 in the counterclockwise direction, as indicated by rotation direction arrow 1502. Device 100 determines a rotational speed and a direction based on the determined change in the position of crown 108. In response to determining the change in the position of crown 108, the device rotates object 1402, as indicated by movement direction arrow 1504 and illustrated in FIG. 15. The rotation of object 1402 is based on the determined rotational speed and direction. Rotational speed may be expressed in numerous ways. For example, rotational speed may be expressed as hertz, as rotations per unit of time, as rotations per frame, as revolutions per unit of time, as revolutions per frame, and the like. In one example, object 1402 may be associated with a mass or may have a calculated rotational inertia.

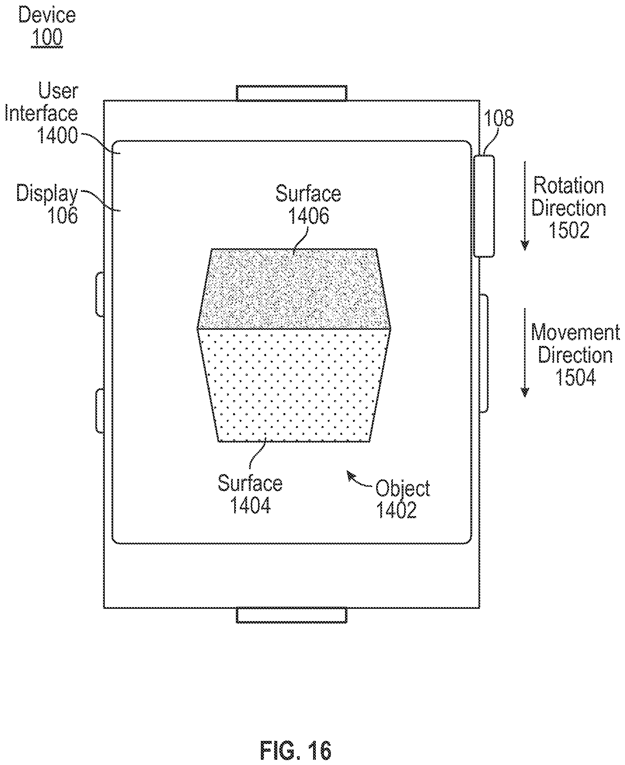

At FIG. 16, device 100 continues to determine a change in the position of crown 108 in the counterclockwise direction, as indicated by rotation direction arrow 1502. Device 100 determines a rotational speed and a direction based on the determined change in the position of crown 108. In response to determining the change in the position of crown 108, the device continues to rotate object 1402, as indicated by movement direction arrow 1504 and illustrated in FIG. 16. The rotation of object 1402 is based on the determined rotational speed and direction.

In one example, the degrees of rotation of object 1402 is based on the determined speed. As the determined speed increases, the degree of rotation of object 1402 increases. In this example, if the rotation of crown 108 is maintained at a constant speed, object 1402 will stay at a static rotated position where no surface of object 1402 is parallel to display 106. If the speed of the rotation of crown 108 is increased, the determined speed will increase and object 1402 will rotate an additional amount.

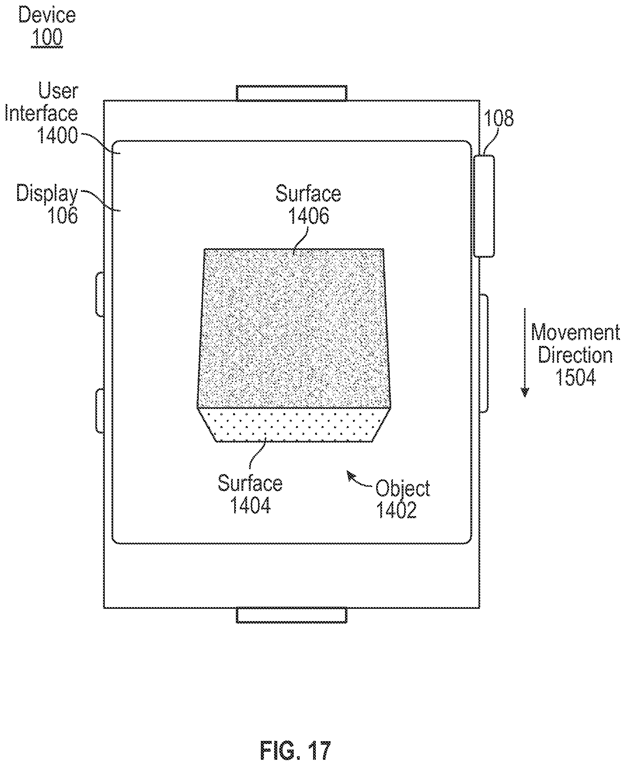

In some examples, object 1402 is configured to rotate to have a surface parallel to display 106 in response to the determined speed being above a speed threshold. When the determined speed exceeds the speed threshold, object 1402 exceeds a rotation of 45 degrees, causing first surface 1404 of object 1402 to rotate away from the display to no longer be displayed and instead causing second surface 1406 of object 1404 rotate toward the display to be displayed. This transition between the display of first surface 1404 and second surface 1406 is illustrated as the transition between FIGs. 16 and 17. Thus, as the determined speed exceeds the speed threshold, the object 1402 flips from one surface to another surface.

At FIGs. 17-18, device 100 determines that there is no change in the position of crown 108. As a result of this determination, object 1402 is rotated such that a displayed surface of object 1402 is parallel to display 106. This rotation may be animated, as illustrated in FIGs. 17-18. Device 100 will rotate object 1402 such that the displayed surface of object 1402 that has the smallest angle with respect to the display is made parallel to the display 106. In other words, the object's surface that best faces the display 106 or is closest to parallel to display 106 is made parallel to the display 106. When a surface of object 1402 is parallel to display 106 and no change in the position of crown 108 is detected, object 1402 is in a steady state. An object is in a steady state when the object is not being translated, rotated, or scaled.

In some examples, when object 1402 is in a steady state, the surface of object 1402 that is parallel to display 106 and displayed on display 106 is determined to be selected. For example, object 1402 may be used as four-phase selection switch. First surface 1404 is associated with a LOW setting instruction and second surface 1406 is associated with a MEDIUM instruction setting. The remaining two selectable surfaces are associated with HIGH and OFF instruction settings. A user can transition between the four settings by rotating crown 108 at above a speed threshold, causing object 1402 to flip and display a desired surface. The desired surface is determined to be selected when the displayed surface is parallel to display 106 and no change in the position of crown 108 is detected.

While a surface is selected, the user can activate the selected surface by one or more of many techniques. For example, the user may press on touch-sensitive display 106, press button 112, or simply allow the surface to remain selected for a predetermined amount of time. In another example, when the displayed surface is parallel to display 106, the action can be interpreted as both a selection and an activation of the data associated with the displayed surface.

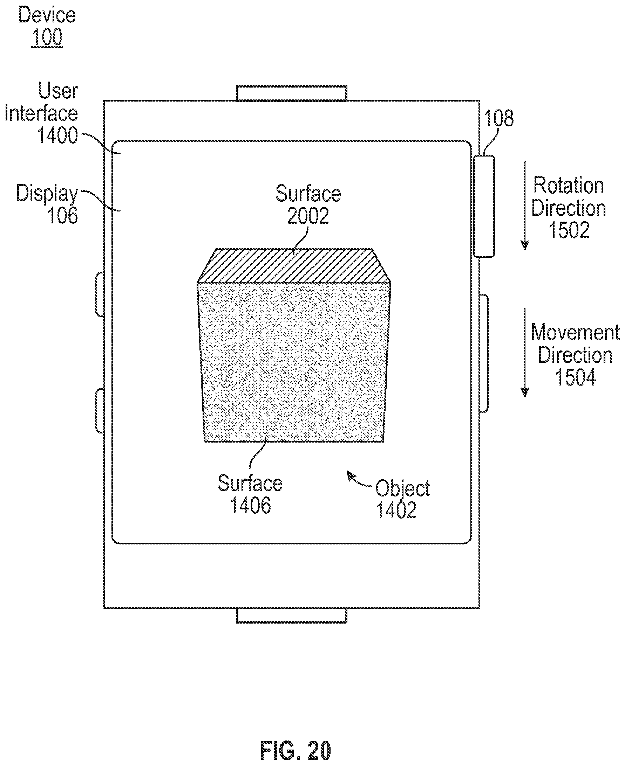

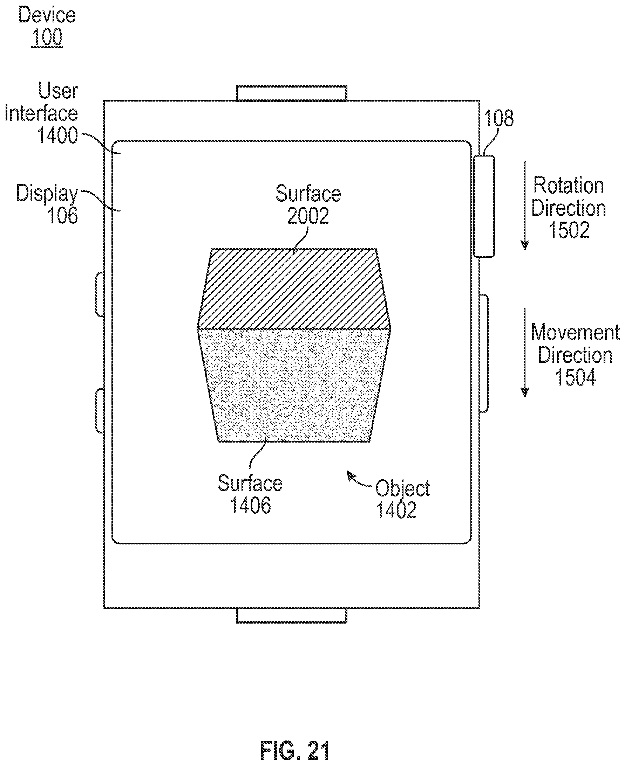

FIGs. 20-23 illustrate a second flip of object 1402 to select third surface 2002 of object 1402. In FIGs. 21-22, device 100 determines a change in the position of crown 108 in the counterclockwise direction, as indicated by rotation direction arrow 1502. Device 100 determines a rotational speed and a direction based on the determined change in the position of crown 108. In response to determining the change in the position of crown 108, the device rotates object 1402, as indicated by movement direction arrow 1504 and illustrated in FIG. 21-22. The rotation of object 1402 is based on the determined rotational speed and direction.

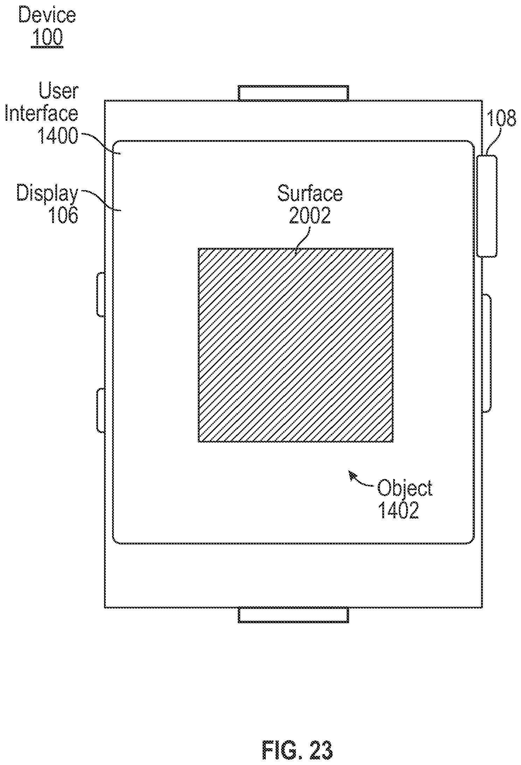

In response to the rotational speed exceeding a threshold, object 1402 flips to cause third surface 2002 to be parallel to display 106 and to be displayed on display 106, as illustrated in FIG. 23. An object is in a steady state when the object is not being translated, rotated, or scaled. When object 1402 is in a steady state, the surface of object 1402 that is parallel to display 106 and displayed on display 106 is determined to be selected. In this example, third surface 2002 is selected.

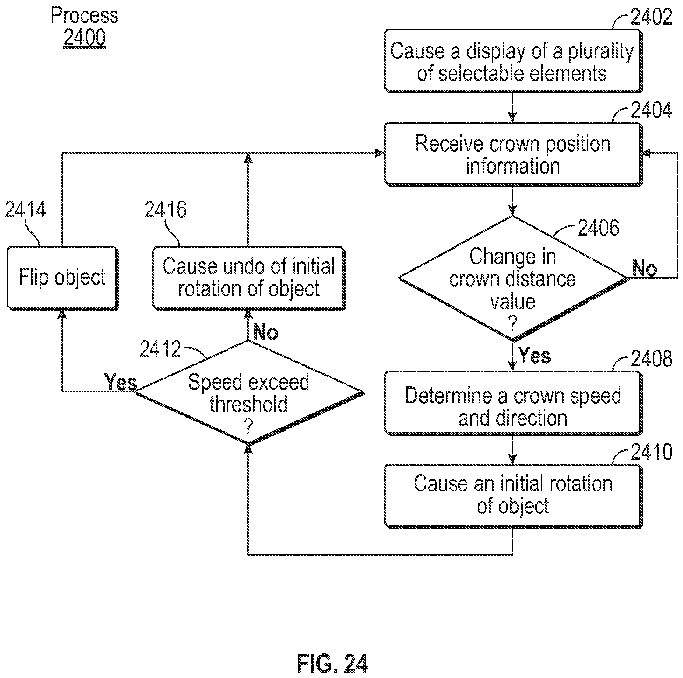

FIG. 24 illustrates an exemplary process for selecting a surface of a multi-sided graphical user interface object in response to a rotation of a crown. Process 2400 is performed at a wearable electronic device (e.g., device 100 in FIG. 1) having a physical crown. In some examples, the electronic device also includes a touch-sensitive display. The process provides an efficient technique for selecting a surface of a multi-sided, three-dimensional object.

At block 2402, the device causes a display of a multi-sided object on a touch-sensitive display of a wearable electronic device. Each selectable surface of the object is associated with a corresponding data value. The data may be, for example, text, an image, an application icon, an instruction, and the like.

At block 2404, the device receives crown position information. The crown position information may be received as a series of pulse signals, real values, integer values, and the like.

At block 2406, the device determines whether a change has occurred in a crown distance value. The crown distance value is based on an angular displacement of the physical crown of the wearable electronic device. A change in the crown distance value is indicative of a user providing input to the wearable electronic device by, for example, turning the physical crown. If the device determines that a change in the crown distance value has not occurred, the system returns to block 2404 and continues receiving crown position information. If the device determines that a change in the crown distance value has occurred, the system continues to block 2408, though the system may continue to receive crown position information.

At block 2408, the device determines a direction and a crown speed. The crown speed is based on the speed of rotation of the physical crown of the wearable electronic device. For example, the determined crown speed may be expressed as hertz, as rotations per unit of time, as rotations per frame, as revolutions per unit of time, as revolutions per frame, and the like. The determined direction is based on a direction of rotation of the physical crown of the wearable electronic device. For example, an up direction can be determined based on a clockwise rotation of the physical crown. Similarly, a down direction can be determined based on a counterclockwise rotation of the physical crown. In other examples, a down direction can be determined based on a clockwise rotation of the physical crown and an up direction can be determined based on a counterclockwise rotation of the physical crown.

At block 2410, in response to determining the change in the crown distance value, the device causes an initial rotation of the multi-sided object on the display. The amount of the rotation is based on the determined crown speed. The direction of rotation is based on the determined direction. The rotation may be animated.

At block 2412, the device determines whether the determined crown speed exceeds a speed threshold. If the device determines that the determined crown speed exceeds the speed threshold, the device continues to block 2414. For example, the speed threshold may be thought of as an escape velocity (or escape speed). An escape velocity is the speed at which the kinetic energy plus the gravitational potential energy of an object is zero. If the device determines that the determined speed does not exceed the speed threshold, the device continues to block 2416.

In some examples, the minimum angular velocity of crown rotation that is necessary to reach escape velocity corresponds directly to the instantaneous angular velocity of crown 108 (FIG. 1), meaning that the user interface of device 100, in essence, responds when crown 108 reaches a sufficient angular velocity. In some embodiments, the minimum angular velocity of crown rotation necessary for reaching the escape velocity is a calculated velocity that is based on, but not directly equal to, the instantaneous ("current") angular velocity of crown 108. In these examples, device 100 can maintain a calculated crown (angular) velocity V in discrete moments in time T according to equation 1:

$$V_T = V_{(T-1)} + \Delta V_{CROWN} - \Delta V_{DRAG}. \hspace{3cm} \text{(EQ. 1)}$$

In equation 1, $V_T$ represents a calculated crown velocity (speed and direction) at time T, $V_{(T-1)}$ represents the previous velocity (speed and direction) at time T-1, $\Delta V_{CROWN}$ represents the change in velocity caused by the force being applied through the rotation of the crown at time T, and $\Delta V_{DRAG}$ represents the change in velocity due to a drag force. The force being applied, which is reflected through $\Delta V_{CROWN}$, can depend on the current velocity of angular rotation of the crown. Thus, $\Delta V_{CROWN}$ can also depend on the current angular velocity of the crown. In this way, device 100 can provide user interface interactions based not only on instantaneous crown velocity but also based on user input in the form of crown movement over multiple time intervals, even if those intervals are finely divided. Note, typically, in the absence of user input in the form of $\Delta V_{CROWN}$, $V_T$ will approach (and become) zero based on $\Delta V_{DRAG}$ in accordance with EQ. 1, but $V_T$ would not change signs without user input in the form of crown rotation ($\Delta V_{CROWN}$).

Typically, the greater the velocity of angular rotation of the crown, the greater the value of $\Delta V_{CROWN}$ will be. However, the actual mapping between the velocity of angular rotation of the crown and $\Delta V_{CROWN}$ can be varied depending on the desired user interface effect. For example, various linear or non-linear mappings between the velocity of angular rotation of the crown and $\Delta V_{CROWN}$ can be used.

Also, $\Delta V_{DRAG}$ can take on various values. For example, $\Delta V_{DRAG}$ can depend on the velocity of crown rotation such that at greater velocities, a greater opposing change in velocity ($\Delta V_{DRAG}$) can be produced. In another example, $\Delta V_{DRAG}$ can have a constant value. It should be appreciated that the above-described requirements of $\Delta V_{CROWN}$ and $\Delta V_{DRAG}$ can be changed to produce desirable user interface effects.

As can be seen from EQ. 1, the maintained velocity ($V_T$) can continue to increase as long as $\Delta V_{CROWN}$ is greater than $\Delta V_{DRAG}$. Additionally, $V_T$ can have non-zero values even when no $\Delta V_{CROWN}$ input is being received, meaning that user interface objects can continue to change without the user rotating the crown. When this occurs, objects can stop changing based on the maintained velocity at the time the user stops rotating the crown and the $\Delta V_{DRAG}$ component.

In some examples, when the crown is rotated in a direction corresponding to a rotation direction that is opposite the current user interface changes, the $V_{(T-1)}$ component can be reset to a value of zero, allowing the user to quickly change the direction of the object without having to provide a force sufficient to offset the $V_T$.

At block 2414, the device causes the object to flip past a transition position between a first surface that was last selected and a new surface. For example, the object has flipped past the transition position when the object will not return to having the first surface displayed parallel to the display without receiving additional user input.

Once the object reaches a steady state, the displayed surface that is parallel to the display can be activated through a designated user input. The displayed surface parallel to the display in the steady state is determined to be selected even before activation. An object is in a steady state when the object is not being translated, rotated, or scaled. This may result in the first surface of the object no longer being displayed, in the case of a cube-shaped object.

At block 2416, because the escape velocity has not been reached, the device causes the object to at least partially return to the object's initial position at the time of block 2408. For example, part of the initial rotation of the object caused at block 2410 can be negated. To achieve this, the device animates a rotation of the object that is in an opposite direction of the initial rotation at block 2410.

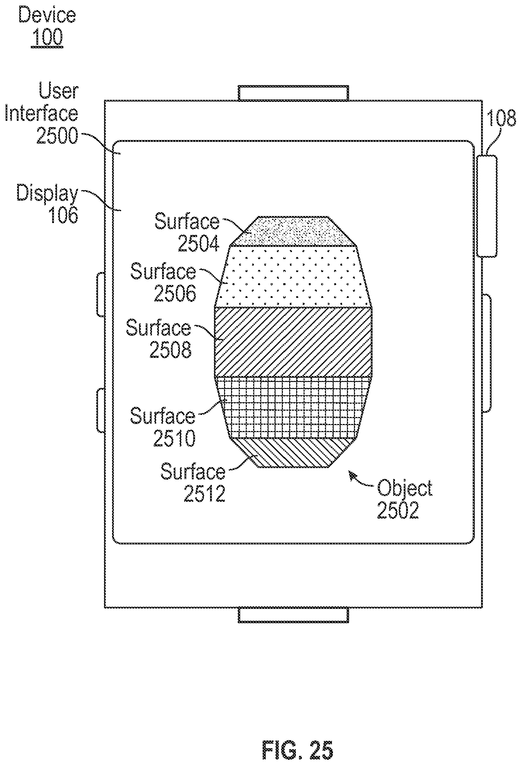

FIG. 25 illustrates a graphical user interface 2500 showing the selection of a surface 2506 of a multi-sided object in response to a rotation of a crown. Object 2502 is a 12-sided rotatable dial, shaped similar to a wheel. Object 2502 is rotatable along a fixed axis. In this example, all 12 surfaces of object 2502 are selectable. These 12 selectable surfaces include surface 2504, surface 2506, surface 2508, surface 2510, and surface 2512. In FIG. 25, surface 2508 is selected because surface 2508 is parallel to display 106 and is displayed on display 106. The selectable surfaces of object 2505 can be selected according to the processes and techniques described in other examples.

In some examples, device 100 can provide haptic feedback based on the content displayed on the display 106. When a user interface object is displayed on display 106, the device can modify the appearance of the object based on a change in a crown distance value received at the device 100 based on a rotation of crown 108. When a criterion is satisfied, a tactile output is output at the device 100.

In one example, the object is a rotatable multi-sided object, such as is described above. The criterion is satisfied when a surface of the multi-sided object is selected. In another example, the criterion is satisfied each time a displayed surface of the multi-sided object passes through a plane parallel to the display.

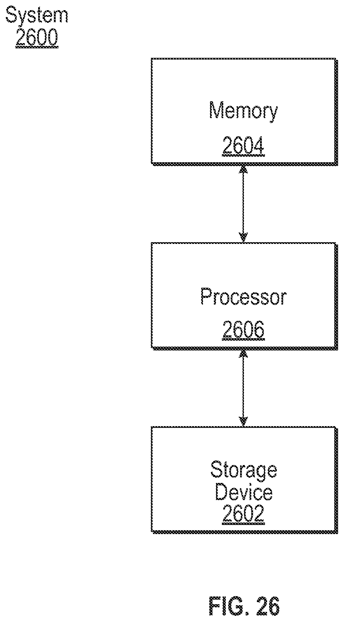

One or more of the functions relating to a user interface can be performed by a system similar or identical to system 2600 shown in FIG. 26. System 2600 can include instructions stored in a non-transitory computer readable storage medium, such as memory 2604 or storage device 2602, and executed by processor 2606. The instructions can also be stored and/or transported within any non-transitory computer readable storage medium for use by or in connection with an instruction execution system, apparatus, or device, such as a computer-based system, processor-containing system, or other system that can fetch the instructions from the instruction execution system, apparatus, or device and execute the instructions. In the context of this document, a "non-transitory computer readable storage medium" can be any medium that can contain or store the program for use by or in connection with the instruction execution system, apparatus, or device. The non-transitory computer readable storage medium can include, but is not limited to, an electronic, magnetic, optical, electromagnetic, infrared, or semiconductor system, apparatus or device, a portable computer diskette (magnetic), a random access memory (RAM), a read-only memory (ROM), an erasable programmable read-only memory (EPROM) (magnetic), a portable optical disc such a CD, CD-R, CD-RW, DVD, DVD-R, or DVD-RW, or flash memory such as compact flash cards, secured digital cards, USB memory devices, memory sticks, and the like.

The instructions can also be propagated within any transport medium for use by or in connection with an instruction execution system, apparatus, or device, such as a computer-based system, processor-containing system, or other system that can fetch the instructions from the instruction execution system, apparatus, or device and execute the instructions. In the context of this document, a "transport medium" can be any medium that can communicate, propagate or transport the program for use by or in connection with the instruction execution system, apparatus, or device. The transport medium can include, but is not limited to, an electronic, magnetic, optical, electromagnetic or infrared wired or wireless propagation medium.

In some examples, system 2600 can be included within device 100. In these examples, processor 2606 can be the same or a different process than processor 202. Processor 2606 can be configured to receive the output from encoder 204, buttons 110, 112, and 114, and from touch-sensitive display 106. Processor 2606 can process these inputs as described above with respect to the processes described and illustrated. It is to be understood that the system is not limited to the components and configuration of FIG. 26, but can include other or additional components in multiple configurations according to various examples.

Although the disclosure and examples have been fully described with reference to the accompanying drawings, it is to be noted that various changes and modifications will become apparent to those skilled in the art.

**Claims**

1. A computer-implemented method comprising:

   displaying a first surface of a plurality of selectable surfaces of a virtual object on a touch-sensitive display of a wearable electronic device, the first surface associated with a first data;
   detecting rotation of a physical crown of the wearable electronic device;
   determining a speed, wherein the speed is based on an angular velocity of the physical crown during the detected rotation; and
   in response to detecting rotation of the physical crown, rotating the virtual object about an axis parallel to the display in a first direction; and
   after rotating the virtual object about the axis parallel to the display in the first direction:

      in response to the speed being determined to exceed a speed threshold continuing to rotate the virtual object about the axis parallel to the display in the first direction to display a second surface of the plurality of selectable surfaces of the virtual object on the display, the second surface displayed parallel to the display while in a steady state; and
      in response to a determination that the speed is below the speed threshold, rotating the virtual object about the axis parallel to the display in a second direction that is opposite to the first direction to display the first surface of the plurality of selectable surfaces of the virtual object on the display parallel to the display.

2. The computer-implemented method of claim 1, further comprising:
   determining a selection of the second surface in response to the display of the second surface parallel to the display in a steady state.

3. The computer-implemented method of claim 2, further comprising:
   in response to determining the selection of the second surface, generating a haptic output at the wearable electronic device.

4. The computer-implemented method of claim 1, further comprising:
   determining a selection of the first surface in response to the display of the first surface, in a steady state, parallel to the display.

5. The computer-implemented method of claim 4, further comprising:

in response to a determining a selection of the first surface, generating a haptic output at the wearable electronic device.

6.  The computer-implemented method of any of claims 1-5, wherein the virtual object is a cube.

7.  The computer-implemented method of any of claims 1-5, wherein the virtual object is a multi-sided rotatable dial.

8.  The computer-implemented method of any of claims 1-7, further comprising:
    associating the second surface with a second data, wherein the first data and the second data are different.

9.  The computer-implemented method of any of claims 2-3, wherein determining a selection of the second surface in response to the display of the second surface parallel to the display in a steady state comprises any one of: detecting a tap gesture on the second surface, detecting on the touch-sensitive display a touch with force greater than a predetermined threshold, detecting a touch on the physical crown, detecting a press on the physical crown, and detecting a touch on a touch-sensitive surface of the wearable electronic device.

10. The computer-implemented method of any of claims 1-9, wherein the speed is the rate of rotation of the virtual object.

11. The computer-implemented method of any of claims 1 to 10, further comprising:
    in response to a determination that the angular velocity of a physical crown of the wearable electronic device during the detected rotation is below a predetermined threshold:
    displaying an animation of the first surface beginning parallel to the display, moving to an angle to the display, and returning to a steady state parallel to the display.

12. The computer-implemented method of any of claims 1-11, wherein the physical crown is a mechanical crown.

13. A computer-readable medium storing one or more programs configured to be executed by one or more processors of a wearable electronic device with a physical crown, and a touch-sensitive display, the one or more programs including instructions for performing the method of any of claims 1 to 12.

14. A wearable electronic device comprising:

    one or more processors;
    a physical crown operatively coupled to the one or more processors; and
    a touch-sensitive display operatively coupled to the one or more processors, the one or more processors configured to perform the method of any of claims 1 to 12.


**Patentansprüche**

1.  Computerimplementiertes Verfahren, das aufweist:

    Anzeigen einer ersten Oberfläche einer Vielzahl von auswählbaren Oberflächen eines virtuellen Objektes auf einer berührungsempfindlichen Anzeige einer tragbaren elektronischen Vorrichtung, wobei die erste Oberfläche mit ersten Daten verknüpft ist;
    Erfassen einer Rotation einer körperlichen Krone der tragbaren elektronischen Vorrichtung;
    Bestimmen einer Geschwindigkeit, wobei die Geschwindigkeit auf einer Winkelgeschwindigkeit der körperlichen Krone während der erfassten Rotation basiert; und
    in Antwort auf Erfassen einer Rotation der körperlichen Krone, Rotieren des virtuellen Objekts um eine Achse, die parallel zu der Anzeige in einer ersten Richtung ist; und
    nach dem Rotieren des virtuellen Objektes um die Achse, die parallel zu der Anzeige in der ersten Richtung ist:

        in Antwort darauf, dass bestimmt wird, dass die Geschwindigkeit einen Geschwindigkeitsschwellwert überschreitet, Fortfahren, das virtuelle Objekt um die Achse zu rotieren, die parallel zu der Anzeige in der ersten Richtung ist, um eine zweite Oberfläche der Vielzahl von auswählbaren Oberflächen des virtuellen Objektes auf der Anzeige anzuzeigen, wobei die zweite Oberfläche parallel zu der Anzeige angezeigt wird, während sie in einem stationären Zustand ist; und
        in Antwort auf ein Bestimmen, dass die Geschwindigkeit unter dem Geschwindigkeitsschwellwert ist, Rotieren des virtuellen Objektes um die Achse, die parallel zu der Anzeige ist, in eine zweite Richtung, die der ersten Richtung entgegengesetzt ist, um die erste Oberfläche der Vielzahl von auswählbaren Oberflächen des virtuellen Objekts auf der Anzeige parallel zu der Anzeige anzuzeigen.

2. Computerimplementiertes Verfahren gemäß Anspruch 1, das weiter aufweist:
Bestimmen einer Auswahl der zweiten Oberfläche in Antwort auf die Anzeige der zweiten Oberfläche parallel zu der Anzeige in einem stationären Zustand.

3. Computerimplementiertes Verfahren gemäß Anspruch 2, das weiter aufweist:
in Antwort auf Bestimmen der Auswahl der zweiten Oberfläche, Erzeugen einer haptischen Ausgabe an der tragbaren elektronischen Vorrichtung.

4. Computerimplementiertes Verfahren gemäß Anspruch 1, das weiter aufweist:
Bestimmen einer Auswahl der ersten Oberfläche in Antwort auf die Anzeige der ersten Oberfläche in einem stationären Zustand, parallel zu der Anzeige.

5. Computerimplementiertes Verfahren gemäß Anspruch 4, das weiter aufweist:
in Antwort auf ein Bestimmen einer Auswahl der ersten Oberfläche, Erzeugen einer haptischen Ausgabe an der tragbaren elektronischen Vorrichtung.

6. Computerimplementiertes Verfahren gemäß einem der Ansprüche 1 bis 5, wobei das virtuelle Objekt ein Kubus ist.

7. Computerimplementiertes Verfahren gemäß einem der Ansprüche 1 bis 5, wobei das virtuelle Objekt eine mehrseitige drehbare Wählscheibe ist.

8. Computerimplementiertes Verfahren gemäß einem der Ansprüche 1 bis 7, das weiter aufweist:
Verknüpfen der zweiten Oberfläche mit zweiten Daten, wobei die ersten Daten und die zweiten Daten unterschiedlich sind.

9. Computerimplementiertes Verfahren gemäß einem der Ansprüche 2 bis 3, wobei Bestimmen einer Auswahl der zweiten Oberfläche in Antwort auf die Anzeige der zweiten Oberfläche parallel zu der Anzeige in einem stationären Zustand irgendeines umfasst von: Erfassen einer Tippgeste auf der zweiten Oberfläche, Erfassen auf der berührungsempfindlichen Anzeige einer Berührung mit einer Kraft, die größer als ein vorbestimmter Schwellwert ist, Erfassen einer Berührung auf der körperlichen Krone, Erfassen eines Druckes auf der körperlichen Krone und Erfassen einer Berührung auf einer berührungsempfindlichen Oberfläche der tragbaren elektronischen Vorrichtung.

10. Computerimplementiertes Verfahren gemäß einem der Ansprüche 1 bis 9, wobei die Geschwindigkeit die Rotationsrate des virtuellen Objekts ist.

11. Computerimplementiertes Verfahren gemäß einem der Ansprüche 1 bis 10, die weiter aufweist:
in Antwort auf ein Bestimmen, dass die Winkelgeschwindigkeit einer körperlichen Krone der tragbaren elektronischen Vorrichtung während der erfassten Rotation unter einem bestimmten Schwellwert ist:
Anzeigen einer Animation der ersten Oberfläche, die parallel zu der Anzeige beginnt, sich zu einem Winkel zu der Anzeige bewegt und zu einem stationären Zustand parallel zu der Anzeige zurückkehrt.

12. Computerimplementiertes Verfahren gemäß einem der Ansprüche 1 bis 11, wobei die körperliche Krone eine mechanische Krone ist.

13. Computerlesbares Medium, das ein oder mehrere Programme speichert, die konfiguriert sind, um durch einen oder mehrere Prozessoren einer tragbaren elektronischen Vorrichtung mit einer körperlichen Krone ausgeführt zu werden, und einer berührungsempfindlichen Anzeige, wobei das eine oder die mehreren Programme Anweisungen umfassen zum Durchführen des Verfahrens gemäß einem der Ansprüche 1 bis 12.

14. Tragbare elektronische Vorrichtung die aufweist:

einen oder mehrere Prozessoren;
eine körperliche Krone, die operativ an den einen oder die mehreren Prozessoren gekoppelt ist; und
eine berührungsempfindliche Anzeige, die operativ an die einen oder die mehreren Prozessoren gekoppelt ist, wobei der eine oder die mehreren Prozessoren konfiguriert sind, um das Verfahren gemäß einem der Ansprüche 1 bis 12 durchzuführen

## Revendications

1. Un procédé mis en œuvre par informatique comprenant :

l'affichage d'une première surface d'une pluralité de surfaces sélectionnables d'un objet virtuel sur un afficheur sensible au toucher d'un dispositif électronique à porter sur soi, la première surface étant associée à une première donnée ;
la détection d'une rotation d'une couronne physique du dispositif électronique à porter sur soi ;
la détermination d'une vitesse, la vitesse étant basée sur une vitesse angulaire de la couronne physique lors de la rotation détectée ; et
en réponse à la détection de la rotation de la couronne physique, la rotation de l'objet virtuel autour d'un axe parallèle à l'afficheur dans une première direction ; et après rotation de l'objet virtuel autour de l'axe parallèle à l'afficheur dans la première direction :

en réponse à une détermination que la vitesse dépasse une vitesse seuil, la poursuite de la rotation de l'objet virtuel autour de l'axe parallèle à l'afficheur dans la première direction pour afficher une seconde surface de la pluralité de surfaces sélectionnables de l'objet virtuel sur l'afficheur, la seconde surface étant affichée parallèlement à l'afficheur en étant dans un état stationnaire ; et
en réponse à une détermination que la vitesse est au-dessous de la vitesse seuil, la rotation de l'objet virtuel autour de l'axe parallèle à l'afficheur dans une seconde direction qui est opposée à la première direction pour afficher la première surface de la pluralité de surfaces sélectionnables de l'objet virtuel sur l'afficheur parallèlement à l'afficheur.

2. Le procédé mis en œuvre par informatique de la revendication 1, comprenant en outre :
la détermination d'une sélection de la seconde surface en réponse à l'affichage de la seconde surface parallèlement à l'afficheur dans un état stationnaire.

3. Le procédé mis en œuvre par calculateur de la revendication 2, comprenant en outre :
en réponse à la détermination de la sélection de la seconde surface, la génération d'une sortie haptique sur le dispositif électronique à porter sur soi.

4. Le procédé mis en œuvre par calculateur de la revendication 1, comprenant en outre :
la détermination d'une sélection de la première surface en réponse à l'affichage de la première surface, dans un état stationnaire, parallèlement à l'afficheur.

5. Le procédé mis en œuvre par calculateur de la revendication 4, comprenant en outre :
en réponse à une détermination d'une sélection de la première surface, la génération d'une sortie haptique sur le dispositif électronique à porter sur soi.

6. Le procédé mis en œuvre par informatique de l'une des revendications 1 à 5, dans lequel l'objet virtuel est un cube.

7. Le procédé mis en œuvre par calculateur de l'une des revendications 1 à 5, dans lequel l'objet virtuel est un cadran rotatif à plusieurs faces.

8. Le procédé mis en œuvre par informatique de l'une des revendications 1 à 7, comprenant en outre :
l'association de la seconde surface à une seconde donnée, la première donnée et la seconde donnée étant différentes.

9. Le procédé mis en œuvre par informatique de l'une des revendications 2 à 3, dans lequel la détermination d'une sélection de la seconde surface en réponse à l'affichage de la seconde surface parallèlement à l'afficheur dans un état stationnaire comprend l'une d'entre : la détection d'un geste de tapotement sur la seconde surface, la détection sur l'afficheur sensible au toucher d'un toucher avec une force supérieure à un seuil prédéterminé, la détection d'un toucher sur la couronne physique, la détection d'un appui sur la couronne physique, et la détection d'un toucher sur une surface sensible au toucher du dispositif électronique à porter sur soi.

**10.** Le procédé mis en œuvre par informatique de l'une des revendications 1 à 9, dans lequel la vitesse est la vitesse en rotation de l'objet virtuel.

**11.** Le procédé mis en œuvre par informatique de l'une des revendications 1 à 10, comprenant en outre :
en réponse à une détermination que la vitesse angulaire d'une couronne physique du dispositif électronique à porter sur soi pendant la rotation détectée est au-dessous d'un seuil prédéterminé :
l'affichage d'une animation de la première surface qui commence à devenir parallèle à l'affichage, le déplacement sur un angle par rapport à l'afficheur, et le retour à un état stationnaire parallèle à l'afficheur.

**12.** Le procédé mis en œuvre par informatique de l'une des revendications 1 à 11, dans lequel la couronne physique est une couronne mécanique.

**13.** Un support lisible par calculateur stockant un ou plusieurs programmes configurés pour être exécutés par les un ou plusieurs processeurs d'un dispositif électronique à porter sur soi muni d'une couronne physique et d'un afficheur sensible au toucher, les un ou plusieurs programmes comprenant des instructions pour mettre en œuvre le procédé de l'une des revendications 1 à 12.

**14.** Un dispositif électronique à porter sur soi comprenant :

un ou plusieurs processeurs ;
une couronne physique couplée de manière opérante aux un ou plusieurs processeurs ; et
un afficheur sensible au toucher couplé de manière opérante aux un ou plusieurs processeurs, les un ou plusieurs processeurs étant configurés pour mettre en œuvre le procédé de l'une des revendications 1 à 12.

100

FIG. 1

Device
100

```
┌─────────────────┐
│     Buttons     │
│  110/112/114    │
└─────────────────┘
         │
         ▼
┌─────────────────┐      ┌─────────────────┐      ┌─────────────────┐
│   Processor     │◄─────│    Encoder      │◄─────│     Crown       │
│      202        │      │      204        │      │      108        │
└─────────────────┘      └─────────────────┘      └─────────────────┘
         ▲
         ▼
┌─────────────────┐
│    Display      │
│      106        │
└─────────────────┘
```

FIG. 2

FIG. 3

**FIG. 4**

Device
100

User
Interface
300

Display
106

108

Surface
304

Rotation
Direction
308

Movement
Direction
310

Object
302

FIG. 5

Device
100

User
Interface
300

Display
106

108

Rotation
Direction
308

Surface
304

Movement
Direction
310

Object
302

FIG. 6

FIG. 7

Device
100

User
Interface
300

Display
106

108

Rotation
Direction
308

Surface
306

Movement
Direction
310

Object
302

FIG. 8

Device
100

User
Interface
300

Display
106

108

Surface
306

Movement
Direction
310

Object
302

FIG. 9

Device
100

User
Interface
300

Display
106

108

Surface
306

Movement
Direction
310

Object
302

FIG. 10

Device
100

User
Interface
300

Display
106

108

Surface
306

Movement
Direction
310

Object
302

FIG. 11

FIG. 12

Process
1300

Cause a display of a plurality
of selectable elements
⌐1302

Receive crown position
information
⌐1304

Change in
crown distance
value
?
⌐1306
No

Yes

Determine a crown speed
and direction
⌐1308

Cause an initial rotation
of object
⌐1310

Speed exceed
threshold
?
1312⌐
Yes
No

Flip object
1314

Cause undo of initial
rotation of object
1316

FIG. 13

FIG. 14

FIG. 15

**FIG. 16**

**FIG. 17**

FIG. 18

Device
100

User
Interface
1400

Display
106

Surface
1406

108

Object
1402

FIG. 19

FIG. 20

Device
100

User
Interface
1400

Display
106

108

Surface
2002

Rotation
Direction
1502

Movement
Direction
1504

Surface
1406

Object
1402

FIG. 21

FIG. 22

Device
**100**

User
Interface
**1400**

Display
**106**

**108**

Surface
**2002**

Object
**1402**

FIG. 23

Process
<u>2400</u>

2402
Cause a display of a plurality
of selectable elements

2404
Receive crown position
information

2406
Change in
crown distance
value
?

No

2414
Flip object

2416
Cause undo of initial
rotation of object

No

2412
Speed exceed
threshold
?

Yes

Yes

2408
Determine a crown speed
and direction

2410
Cause an initial rotation
of object

FIG. 24

Device
100

User
Interface
2500

Display
106

Surface
2504

Surface
2506

Surface
2508

Surface
2510

Surface
2512

108

Object
2502

FIG. 25

System
2600

Memory

2604

Processor

2606

Storage
Device
2602

FIG. 26

**EP 3 042 271 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61873356
- US 61873359
- US 61959851
- US 61873360
- US 47665714
- US 61747278
- US 5477508 A